(19) Europäisches Patentamt
European Patent Office
Office européen des brevets

(11) EP 2 793 212 A1

(12) EUROPEAN PATENT APPLICATION
published in accordance with Art. 153(4) EPC

(43) Date of publication:
22.10.2014 Bulletin 2014/43

(51) Int Cl.:
G09F 15/02 (2006.01)   B32B 5/18 (2006.01)
G09F 3/08 (2006.01)   G09F 7/18 (2006.01)

(21) Application number: 12857360.7

(22) Date of filing: 11.12.2012

(86) International application number:
PCT/JP2012/082031

(87) International publication number:
WO 2013/089086 (20.06.2013 Gazette 2013/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 13.12.2011 JP 2011271880

(71) Applicants:
• Nitto Denko Corporation
Ibaraki-shi, Osaka 567-8680 (JP)
• Kabushiki Kaisha Nitoms
Tokyo 104-0061 (JP)

(72) Inventors:
• HYODO, Tomonori
Ibaraki-shi
Osaka 567-8680 (JP)

• HIRAO, Akira
Ibaraki-shi
Osaka 567-8680 (JP)
• OKEYUI, Takuji
Ibaraki-shi
Osaka 567-8680 (JP)
• SATODA, Yoshinari
Tokyo 104-0061 (JP)
• AKAMATSU, Motoaki
Tokyo 104-0061 (JP)
• KUSAKABE, Naoki
Tokyo 104-0061 (JP)

(74) Representative: Grünecker, Kinkeldey,
Stockmair & Schwanhäusser
Leopoldstrasse 4
80802 München (DE)

(54) **AFFIXED MATERIAL FOR DISPLAY**

(57) The present invention provides an attached material for display that is excellent in peelability, and can be repeatedly used. The attached material for display of the present invention includes a display base material and a foam layer formed on one side of the display base material and having an open-cell structure having through-holes between adjacent spherical cells, wherein: the spherical cells have an average pore diameter of less than 20 μm, the through-holes have an average pore diameter of 5 μm or less, and the foam layer has, on a surface thereof, surface openings having an average pore diameter of 20 μm or less.

FIG. 3

EP 2 793 212 A1

**Description**

Technical Field

The present invention relates to an attached material for display including a foam layer.

Background Art

An attached material for display such as a tag, a seal, or a label typically includes a pressure-sensitive adhesive layer formed on one side of its display base material, and is attached to an adherend through the pressure-sensitive adhesive layer (for example, Patent Literature 1).
However, such attached material for display involves, for example, a problem in that its adhesion reduces when the material is repeatedly used. Meanwhile, the problem of peelabili tymay occur. For example, an adhesive residue occurs when the material is peeled from the adherend.
To cope with the problems, a poster with a micro sucker utilizing not a pressure-sensitive adhesive that raises concern about contamination of the adherend but a micro sucker effect has been proposed (for example, Patent Literature 2). However, in the case where an attached material for display utilizing the micro sucker effect is of a large size like the poster or the like, when air enters a gap between the adherend and a micro sucker layer at the time of its attachment, the air is not removed unless the material is peeled once. Accordingly, a specific jig or technology is needed at the time of the attachment.
Meanwhile, there has been proposed a magnetic attached body obtained by forming a magnet sheet utilizing magnetism on the back side of a pressure-sensitive adhesive sheet, the body being detachable from a magnetic material (for example, Patent Literature 3). However, an attached material utilizing magnetism requires that the adherend be a magnetic material, and hence does not express its adsorption power on a glass, plastic, wall, or the like.

Citation List

Patent Literature

[PTL 1] JP 11-342690 A
[PTL 2] JP 2001-356724 A
[PTL 3] JP 09-024573 A

Summary of Invention

Technical Problem

The present invention has been made to solve the problems, and an object of the present invention is to provide an attached material for display that is excellent in attachment property and peelability, and can be repeatedly attached and peeled.

Solution to problem

According to one embodiment of the present invention, there is provided an attached material for display. The attached material for display includes: a display base material; and a foam layer formed on one side of the display base material and having an open-cell structure having through-holes between adjacent spherical cells. The spherical cells have an average pore diameter of less than 20 $\mu$m, and the through-holes have an average pore diameter of 5 $\mu$m or less. The foam layer has, on a surface thereof, surface openings having an average pore diameter of 20 $\mu$m or less.
In a preferred embodiment, the foam layer is formed on one end portion of the display base material.
In a preferred embodiment, the foam layer includes a base material layer.
In a preferred embodiment, the attached material for display further includes another layer.
In a preferred embodiment, the foam has a normal shear adhesive strength of 1 N/cm$^2$ or more.
In a preferred embodiment, the foam has a normal shear adhesive strength of 5 N/cm$^2$ or more.

Advantageous Effects of Invention

According to one embodiment of the present invention, the attached material for display that exhibits sufficient adhesion, is excellent inpeelability, and can be repeatedly used can be provided by using a foam having a specific structure.

Brief Description of Drawings

FIGS. **1(a)**, **1(b),** and **1(c)** are each a schematic cross-sectional view of an attached material for display according to a preferred embodiment of the present invention.

FIG. **2** is a photographic view of an SEM photograph of a cross-section of a foam forming a foam layer, the photographic view clearly showing an open-cell structure having through-holes between adjacent spherical cells.

FIG. **3** is a photographic view of a surface/cross-sectional SEM photograph obtained by photographing a foam produced in Example 1 from an oblique direction.

Description of Embodiments

<<A. Attached material for display>>

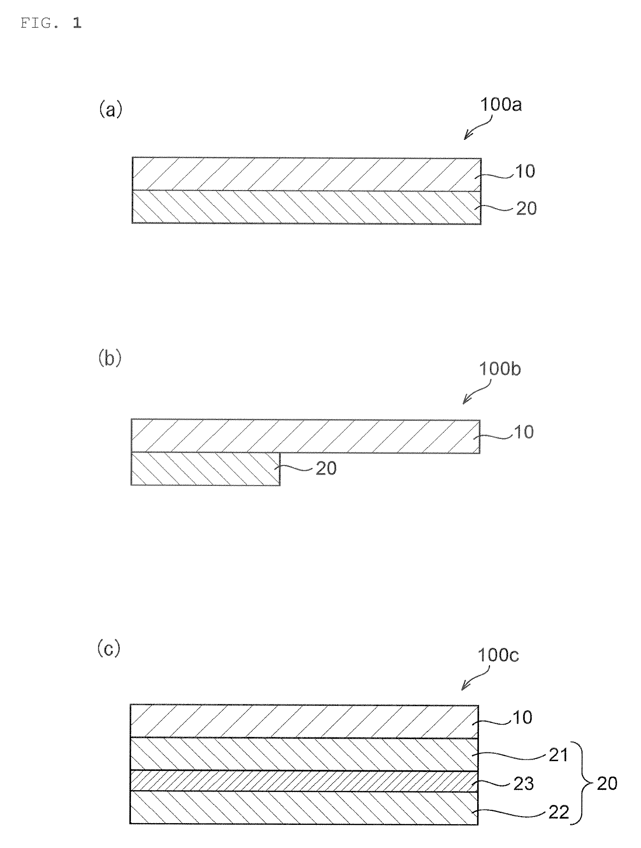

FIG. **1(a)** is a schematic cross-sectional view of an attached material **100a** for display according to a preferred embodiment of the present invention. The attached material **100a** for display includes a display base material **10** and a foam layer **20** formed on one side of the display base material **10**. FIG. **1(b)** is a schematic cross-sectional view of an attached material **100b** for display according to another preferred embodiment of the present invention. In the attached material **100b** for display, the foam layer **20** is formed on one end portion of the display base material **10**. FIG. **1(c)** is a schematic cross-sectional view of an attached material **100c** for display according to still another preferred embodiment of the present invention. In the attached material **100c** for display, the foam layer **20** includes a base material layer **23.** In this embodiment, the foam layer **20** is of a laminated structure having a first foam layer **21,** the base material layer **23,** and a second foam layer **22** in the stated order. It should be noted that the foam layers **21** and **22** may be foams having different physical properties or may be foams having the same physical properties. The attached material for display of the present invention may further include another layer, though the layer is not shown. The other layer is preferably formed between the display base material and the foam layer, and/or on the side of the display base material where the foam layer is not formed. In addition, the surface of the foam layer may be provided with a peeling film.

<<B. Display base material>>

Any appropriate base material can be used as the display base material depending on applications and the like. Typical examples of the display base material include a plastic film, a plastic plate, paper, a woven fabric, a nonwoven fabric, and a laminate thereof. The plastic film and the plastic plate are each formed from any appropriate resin. Examples of such resin include: polyolefin-based resins such as high density polyethylene, low density polyethylene, linear low density polyethylene, polypropylene, and poly-4-methylpentene-1; polyesters such as polyethylene terephthalate, polybutylene terephthalate, polyethylene naphthalate, and polybutylene terephthalate; styrene-based resins such as polystyrene; acrylic resins; nylon; polyimide; and polyvinyl chloride. The base material may have a monolayer form, or may have a lamination layer form.
The side of the display base material on which a character, figure, or the like is to be displayed may be subjected to various surface treatments for the purposes of, for example, improvements in printing property, printability, and writing property for a pencil, various pens, and the like, the facilitation of the erasing of the displayed character, figure, or the like, and hard coating.
A pattern such as a grid or a ruled line may be formed in advance in the display base material.
The thickness of the display base material may be appropriately set depending on its construction, applications, and the like.
It should be noted that each of the following methods may be adopted as a method of laminating the display base material and the foam layer: the foam layer is produced and then laminated on the display base material through an adhesion layer, or the foam layer is directly formed and laminated on the display base material.

<<C. Foam layer>>

The foam layer has an open-cell structure having through-holes between adjacent spherical cells. The "spherical cells" as used herein may not be air bubbles of strictly spherical shapes and may be, for example, air bubbles of substantially spherical shapes with partial deformation or air bubbles each formed of a space having large deformation. In addition, the foam layer has surface openings at least on its attachment surface (smooth surface). The surface openings are preferably concave-shaped depressed holes of a micron order.

The open-cell structure of the foam may be an open-cell structure having through-holes between most or all of the adjacent spherical cells, or may be a semi-closed and semi-open-cell structure in which the number of the through-holes is relatively small. The use of a foam having such open-cell structure enables the foam layer of the present invention to have sufficient adhesion. This is probably because of the following reason: when the foam layer is pressed against an adherend, the spherical cells and the through-holes are compressed to remove air present in the foam layer to the outside, and adsorptivity resulting from an atmospheric pressure difference between the inside and the outside caused by the removal is exhibited. The air is easily removed to the outside by the pressing because the open-cell structure elongates in any direction. Probably as a result of the foregoing, a sufficient atmospheric pressure difference occurs and hence excellent adsorptivity is exhibited. In addition, as described above, the adhesion of the foam layer of the present invention utilizes adsorption power. Accordingly, the attached material does not cause any adhesive residue, can be easily peeled from the adherend, and can be repeatedly attached and peeled.

The spherical cells included in the foam each have an average pore diameter of less than 20 $\mu$m, preferably 15 $\mu$m or less, still more preferably 10 $\mu$m or less. The lower limit value of the average pore diameter of each of the spherical cells included in the foam is not particularly limited, and for example, is preferably 0.01 $\mu$m, more preferably 0.1 $\mu$m, still more preferably 1 $\mu$m. When the average pore diameter of each of the spherical cells included in the foam falls within the range, the average pore diameter of each of the spherical cells of the foam can be precisely controlled to a small one. With this, more excellent adhesion can be obtained without causing the inclusion of air. In addition, a foam excellent in toughness and heat resistance can be obtained.

The foam has a density of preferably 0.15 g/cm$^3$ to 0.9 g/cm$^3$, more preferably 0.15 g/cm$^3$ to 0.7 g/cm$^3$, still more preferably 0.15 g/cm$^3$ to 0.5 g/cm$^3$. When the density of the foam falls within the range, while the range of the density of the foam is controlled to a wide one, a foam excellent in toughness and heat resistance can be obtained.

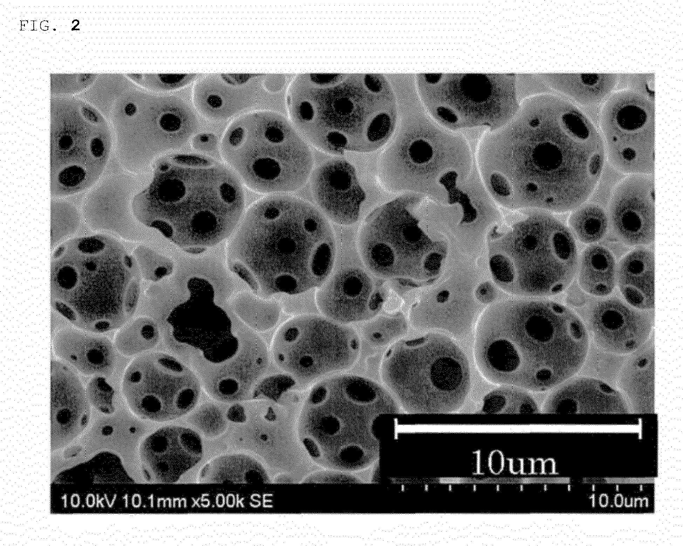

The through-holes present between the adjacent spherical cells affect the physical properties of the foam. For example, there is a tendency that, as the average pore diameter of each of the through-holes becomes smaller, the strength of the foam becomes higher. FIG. **2** shows a photographic view of a cross-sectional SEM photograph of the foam, the photographic view clearly showing an open-cell structure having through-holes between adjacent spherical cells.

The through-holes present between the adjacent spherical cells have an average pore diameter of 5 $\mu$m or less, preferably 4 $\mu$m or less, more preferably 3 $\mu$m or less. The lower limit value of the average pore diameter of each of the through-holes present between the adjacent spherical cells is not particularly limited, and for example, is preferably 0.001 $\mu$m, more preferably 0.01 $\mu$m. When the average pore diameter of each of the through-holes present between the adjacent spherical cells falls within the range, a foam excellent in toughness and heat resistance can be obtained.

The upper limit value of the average pore diameter of each of the surface openings is preferably 20 $\mu$m, more preferably 15 $\mu$m, still more preferably 10 $\mu$m, yet still more preferably 5 $\mu$m, particularly preferably 4 $\mu$m, most preferably 3 $\mu$m. The lower limit value of the average pore diameter of each of the surface openings is not particularly limited and is, for example, preferably 0.001 $\mu$m, more preferably 0.01 $\mu$m. Extremely excellent adhesion can be exhibited because such surface openings serve as micro suckers. In addition, when the average pore diameter of each of the surface openings falls within the range, the surface openings serve as micro suckers, and hence, a novel foamed pressure-sensitive adhesive body capable of expressing sufficient adhesion can be provided.

In a preferred embodiment, the foam is crack-free in a 180° bending test. When the foam having such very excellent toughness is used, for example, an attached material for display capable of being rolled up like paper can be obtained.

The foam has a rate of dimensional change of preferably less than $\pm$5%, more preferably $\pm$3% or less, still more preferably $\pm$1% or less, when stored at 125°C for 22 hours. When the rate of dimensional change in the foam stored at 125°C for 22 hours falls within the range, the foam can have very excellent heat resistance.

The foam has a tensile strength of preferably 0.1 MPa or more, more preferably 0.15 MPa or more, still more preferably 0.2 MPa or more. When the tensile strength of the foam falls within the range, the foam can have very excellent mechanical physical properties. It should be noted that the tensile strength is a value measured in conformity with JIS-K-7113 at a tension speed of 50 mm/min.

The foam has a rate of change in tensile strength of preferably less than $\pm$20%, more preferably $\pm$18% or less, when stored at 125°C for 14 days. When the rate of change in tensile strength of the foam stored at 125°C for 14 days falls within the range, the foam can have very excellent heat resistance. It should be noted that the rate of change in tensile strength is a rate of change between tensile strengths before and after the following heating storage treatment, the tensile strengths being measured before and after the storage in conformity with JIS-K-7113 at a tension speed of 50 mm/min: a measurement sample is stored in an oven at 125°C for 14 days.

The foam has a normal shear adhesive strength of preferably 1 N/cm$^2$ or more, more preferably 3 N/cm$^2$ or more, still more preferably 5 N/cm$^2$ or more, particularly preferably 10 N/cm$^2$ or more. When the normal shear adhesive strength of the foam falls within the range, the foam layer of the present invention can express a sufficient adhesion.

The foam has a 180° peel test strength of preferably 1 N/25 mm or less, more preferably 0.8 N/25 mm or less, still more preferably 0.5 N/25 mm or less, particularly preferably 0.3 N/25 mm or less. When the 180° peel test strength of the foam falls within the range, the foam layer of the present invention can express an excellent effect of being able to be easily peeled off in spite of having a high adhesion as described above.

The foam has a 60°C holding strength of preferably 0.5 mm or less, more preferably 0.4 mm or less, still more preferably 0.3 mm or less, particularly preferably 0.2 mm or less. When the 60°C holding strength of the foam falls within the range, the foam layer of the present invention can achieve both of excellent heat resistance and a sufficient adhesion.

Any appropriate material may be adopted as a formation material for the foam depending on purposes.

The thickness of the foam layer may be appropriately set depending on its construction, applications, and the like. The thickness of the foam layer is, for example, about 10 μm to 10 mm.

<<D. Method of producing foam>>

An example of the production method for the foam is a "continuous method" involving continuously supplying an emulsifying machine with a continuous oil phase component and an aqueous phase component to prepare a W/O emulsion which may be used for obtaining the foam, subsequently polymerizing the resultant W/O emulsion to produce a water-containing polymer, and subsequently dehydrating the resultant water-containing polymer. Another example of the production method for the foam is a "batch method" involving feeding an emulsifying machine with an appropriate amount of an aqueous phase component with respect to a continuous oil phase component, continuously supplying the aqueous phase component with stirring to prepare a W/O emulsion which may be used for obtaining the foam, polymerizing the resultant W/O emulsion to produce a water-containing polymer, and subsequently dehydrating the resultant water-containing polymer.

A continuous polymerization method involving continuously polymerizing a W/O emulsion is a preferred method because its production efficiency is high and an effect of shortening a polymerization time and shortening of a polymerization apparatus can be most effectively utilized.

More specifically, the production method for the foam involves:

a step (I) of preparing a W/O emulsion;
a step (II) of forming the resultant W/O emulsion into a shape;
a step (III) of polymerizing the W/O emulsion formed into a shape; and
a step (IV) of dehydrating the resultant water-containing polymer.

Herein, at least part of the step (II) of forming the resultant W/O emulsion into a shape and the step (III) of polymerizing the W/O emulsion formed into a shape may be simultaneously performed.

<<D-1. Step (I) of preparing W/O emulsion>>

The W/O emulsion is a W/O emulsion including a continuous oil phase component and an aqueous phase component immiscible with the continuous oil phase component. More specifically, the W/O emulsion is obtained by dispersing the aqueous phase component in the continuous oil phase component.

The ratio of the aqueous phase component to the continuous oil phase component in the W/O emulsion may be any appropriate ratio in such a range that the W/O emulsion can be formed. The ratio of the aqueous phase component to the continuous oil phase component in the W/O emulsion can serve as an important factor for determining structural, mechanical, and performance characteristics of a porous polymer material to be obtained by the polymerization of the W/O emulsion. Specifically, the ratio of the aqueous phase component to the continuous oil phase component in the W/O emulsion which may be used for obtaining the foam can serve as an important factor for determining, for example, the density, cell size, cell structure, and dimensions of a wall body for forming a porous structure of a porous polymer material to be obtained by the polymerization of the W/O emulsion.

The lower limit value of the ratio of the aqueous phase component in the W/O emulsion is preferably 30 wt%, more preferably 40 wt%, still more preferably 50 wt%, particularly preferably 55 wt%, and the upper limit value thereof is preferably 95 wt%, more preferably 90 wt%, still more preferably 85 wt%, particularly preferably 80 wt%. When the ratio of the aqueous phase component in the W/O emulsion falls within the range, the effects of the present invention can be sufficiently expressed.

The W/O emulsion may include any appropriate additive in such a range that the effects of the present invention are not impaired. Examples of such additive include: a tackifier resin; talc; fillers such as calcium carbonate, magnesium carbonate, silicic acid and salts thereof, clay, mica powder, aluminum hydroxide, magnesium hydroxide, zinc oxide, bentonite, carbon black, silica, alumina, aluminum silicate, acetylene black, and aluminum powder; a pigment; and a dye. Such additives may be used alone or in combination.

Any appropriate method may be adopted as a production method for the W/O emulsion. Examples of the production method for the W/O emulsion which may be used for obtaining the foam include: a "continuous method" involving forming the W/O emulsion by continuously supplying an emulsifying machine with a continuous oil phase component and an aqueous phase component; and a "batch method" involving forming the W/O emulsion by feeding an emulsifying machine with an appropriate amount of an aqueous phase component with respect to a continuous oil phase component and continuously supplying the emulsifying machine with the aqueous phase component with stirring.

In the production of the W/O emulsion, as shearing means for obtaining an emulsion state, for example, there is given application of a high shearing condition using a rotor/stator mixer, a homogenizer, or a microfluidization apparatus. Further, as another shearing means for obtaining an emulsion state, for example, there is given shaking using an impeller mixer or a pin mixer, or gentle mixing of a continuous and dispersion phase through application of a low shearing condition using an electromagnetic stirrer bar.

As an apparatus for preparing the W/O emulsion by the "continuous method," for example, there are given a static mixer, arotor/statormixer, and a pin mixer. It is also possible to achieve more vigorous stirring by increasing a stirring speed or by using an apparatus designed so as to disperse the aqueous phase component more finely in the W/O emulsion in a mixing method.

As an apparatus for preparing the W/O emulsion by the "batch method," for example, there are given, mixing or shaking by hand, a driven impeller mixer, and a three-propeller mixing blade. Specifically, for example, a"T.K. AGIHOMOMIXER" or "T.K. COMBIMIX" manufactured by PRIMIX Corporation can produce a target W/O emulsion under reduced pressure, and the inclusion of air bubbles in the W/O emulsion to be obtained can be significantly reduced.

Any appropriate method may be adopted as a preparation method for the continuous oil phase component. A typical preferred example of the preparation method for the continuous oil phase component is a preparation method for a continuous oil phase component involving preparing a mixed syrup including a hydrophilic polyurethane-based polymer and an ethylenically unsaturated monomer and subsequently compounding the mixed syrup with a polymerization initiator, a cross-linking agent, and any other appropriate component.

Any appropriate method may be adopted as a preparation method for the hydrophilic polyurethane-based polymer. A typical example of the preparation method for the hydrophilic polyurethane-based polymer is a preparation method involving subjecting polyoxyethylene polyoxypropylene glycol and a diisocyanate compound to a reaction in the presence of a urethane reaction catalyst.

<<D-1-1. Aqueous phase component>>

Any aqueous fluid substantially immiscible with the continuous oil phase component may be adopted as the aqueous phase component. Water such as ion-exchanged water is preferred from the viewpoints of ease of handling and low cost.

The aqueous phase component may include any appropriate additive in such a range that the effects of the present invention are not impaired. Examples of such additive include a polymerization initiator and a water-soluble salt. The water-soluble salt can serve as an effective additive for additionally stabilizing the W/O emulsion. Examples of such water-soluble salt include sodium carbonate, calcium carbonate,potassium carbonate, sodium phosphate, calcium phosphate, potassium phosphate, sodium chloride, and potassium chloride. Such additives may be used alone or in combination. The additives which may be included in the aqueous phase component may be used alone or in combination.

<<D-1-2. Continuous oil phase component>

The continuous oil phase component includes a hydrophilic polyurethane-based polymer, an ethylenically unsaturated monomer, and a cross-linking agent. The content of each of the hydrophilic polyurethane-based polymer and the ethylenically unsaturated monomer in the continuous oil phase component may be any appropriate content in such a range that the effects of the present invention are not impaired.

The content of the hydrophilic polyurethane-based polymer, which depends on the ratio of polyoxyethylene in a polyoxyethylene polyoxypropylene glycol unit constituting the hydrophilic polyurethane-based polymer or the amount of the aqueous phase component to be compounded, is as described below, for example. The hydrophilic polyurethane-based polymer is preferably contained in the range of 10 to 30 parts by weight with respect to 70 to 90 parts by weight of the ethylenically unsaturated monomer, and the hydrophilic polyurethane-based polymer is more preferably contained in the range of 10 to 25 parts by weight with respect to 75 to 90 parts by weight of the ethylenically unsaturated monomer. Further, for example, the hydrophilic polyurethane-based polymer is preferably contained in the range of 1 to 30 parts by weight, and the hydrophilic polyurethane-based polymer is more preferably contained in the range of 1 to 25 parts by weight, with respect to 100 parts by weight of the aqueous phase component. When the content of the hydrophilic polyurethane-based polymer falls within the range, the effects of the present invention can be sufficiently expressed.

<<D-1-2-1. Hydrophilic polyurethane-based polymer>>

The hydrophilic polyurethane-based polymer includes a polyoxyethylene polyoxypropylene unit derived from polyoxyethylene polyoxypropylene glycol, and the polyoxyethylene polyoxypropylene unit preferably contains 5 wt% to 25 wt% of polyoxyethylene.

The content of the polyoxyethylene in the polyoxyethylene polyoxypropylene unit is preferably 5 wt% to 25 wt% as described above, the lower limit value thereof is preferably 10 wt%, more preferably 15 wt%, and the upper limit value thereof is preferably 25 wt%, more preferably 20 wt%. The polyoxyethylene in the polyoxyethylene polyoxypropylene unit expresses an effect of stably dispersing an aqueous phase component in a continuous oil phase component. When the content of the polyoxyethylene in the polyoxyethylene polyoxypropylene unit is less than 5 wt%, it may become difficult to stably disperse the aqueous phase component in the continuous oil phase component. When the content of the polyoxyethylene in the polyoxyethylene polyoxypropylene unit is more than 25 wt%, as the condition becomes closer to an HIPE condition, phase transition from a W/O emulsion to an oil-in-water (O/W) emulsion may occur.

A conventional hydrophilic polyurethane-based polymer is obtained by subjecting a diisocyanate compound, a hydrophobic long-chain diol, polyoxyethylene glycol and a derivative thereof, and a low-molecular active hydrogen compound (chain extension agent) to a reaction. However, the number of polyoxyethylene groups included in the hydrophilic polyurethane-based polymer obtained by such method is non-uniform, and hence a W/O emulsion including such hydrophilic polyurethane-based polymer may have lowered emulsification stability. On the other hand, the hydrophilic polyurethane-based polymer included in the continuous oil phase component of the W/O emulsion has such a characteristic structure as described above. Accordingly, in the case where the hydrophilic polyurethane-based polymer is incorporated into the continuous oil phase component of the W/O emulsion, excellent emulsifiability and excellent static storage stability can be expressed even when an emulsifying agent or the like is not positively added.

The hydrophilic polyurethane-based polymer is preferably obtained by subj ecting polyoxyethylene polyoxypropylene glycol and a diisocyanate compound to a reaction. In this case, the lower limit value of the ratio of the polyoxyethylene polyoxypropylene glycol and the diisocyanate compound in terms of NCO/OH (equivalent ratio) is preferably 1, more preferably 1.2, still more preferably 1.4, particularly preferably 1.6, and the upper limit value thereof is preferably 3, more preferably 2.5, still more preferably 2. When the ratio in terms of NCO/OH (equivalent ratio) is less than 1, a gelled product may be liable to be generated in the production of the hydrophilic polyurethane-based polymer. When the ratio in terms of NCO/OH (equivalent ratio) is more than 3, the remaining amount of the diisocyanate compound increases, which may make the W/O emulsion unstable.

Examples of the polyoxyethylene polyoxypropylene glycol include polyether polyols manufactured by ADEKA CORPORATION (ADEKA (trademark) Pluronic L-31, L-61, L-71, L-101, L-121, L-42, L-62, L-72, L-122, 25R-1, 25R-2, and 17R-2), and polyoxyethylene polyoxypropylene glycols manufactured by NOF CORPORATION (PLONON (trademark) 052, 102, and 202). The polyoxyethylene polyoxypropylene glycols may be used alone or in combination.

Examples of the diisocyanate compound include aromatic, aliphatic, and alicyclic diisocyanates, dimers and trimers of these diisocyanates, and polyphenylmethane polyisocyanate. Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, and m-tetramethylxylylene diisocyanate. Examples of the trimers of the diisocyanates include an isocyanurate type, a biuret type, and an allophanate type. The diisocyanate compounds may be used alone or in combination.

The kind, combination, or the like of the diisocyanate compounds has only to be appropriately selected from the viewpoint of, for example, urethane reactivity with polyol. An alicyclic diisocyanate is preferably used from the viewpoints of, for example, rapid urethane reactivity with polyol and suppression of a reaction with water.

The lower limit value of the weight average molecular weight of the hydrophilic polyurethane-based polymer is preferably 5,000, more preferably 7,000, still more preferably 8,000, particularly preferably 10,000, and the upper limit value thereof is preferably 50, 000, more preferably 40, 000, still more preferably 30,000, particularly preferably 20,000.

The hydrophilic polyurethane-based polymer may have a radically polymerizable unsaturated double bond at a terminal thereof. By virtue of the fact that the hydrophilic polyurethane-based polymer has a radically polymerizable unsaturated double bond at a terminal thereof, the effects of the present invention can be additionally expressed.

<<D-1-2-2. Ethylenically unsaturated monomer»

Any appropriate monomer may be adopted as the ethylenically unsaturated monomer as long as the monomer has an ethylenically unsaturated double bond. The ethylenically unsaturated monomers may be used alone or in combination.

The ethylenically unsaturated monomer preferably includes a (meth) acrylic acid ester. The lower limit value of the content of the (meth)acrylic acid ester in the ethylenically unsaturated monomer is preferably 80 wt%, more preferably 85 wt%, and the upper limit value thereof is preferably 100 wt%, more preferably 98 wt%. The (meth) acrylic acid esters may be used alone or in combination.

The (meth)acrylic acid ester is preferably an alkyl (meth)acrylate having an alkyl group (concept encompassing a cycloalkyl group, an alkyl(cycloalkyl) group, and a (cycloalkyl)alkyl group as well) having 1 to 20 carbon atoms. The alkyl group preferably has 4 to 18 carbon atoms. It should be noted that the term "(meth)acrylic" means acrylic and/or methacrylic, and the term "(meth)acrylate" means acrylate and/or methacrylate.

Examples of the alkyl (meth)acrylate having an alkyl group having 1 to 20 carbon atoms include methyl (meth)acrylate, ethyl (meth)acrylate, propyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, lauryl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and isostearyl (meth)acrylate. Of those, n-butyl (meth)acrylate and 2-ethylhexyl (meth)acrylate are preferred. The alkyl (meth)acrylates each having an alkyl group having 1 to 20 carbon atoms may be used alone or in combination.

The ethylenically unsaturated monomer preferably further contains a polar monomer copolymerizable with the (meth)acrylic acid ester. The lower limit value of the content of the polar monomer in the ethylenically unsaturated monomer is preferably 0 wt%, more preferably 2 wt%, and the upper limit value thereof is preferably 20 wt%, more preferably 15 wt%. The polar monomers may be used alone or in combination.

Examples of the polar monomer include: carboxyl group-containing monomers such as (meth) acrylic acid, carboxyethyl (meth)acrylate, carboxypentyl (meth)acrylate, $\omega$-carboxy-polycaprolactone monoacrylate, phthalic acid monohydroxyethyl acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate; and amide group-containing monomers such as N,N-dimethyl(meth)acrylamide, N,N-diethyl(meth)acrylamide, and hydroxyethyl(meth)acrylamide.

<<D-1-2-3. Polymerization initiator>>

The continuous oil phase component preferably includes a polymerization initiator.

Examples of the polymerization initiator include a radical polymerization initiator and a redox polymerization initiator. Examples of the radical polymerization initiator include a thermal polymerization initiator and a photopolymerization initiator.

Examples of the thermal polymerization initiator include an azo compound, a peroxide, peroxycarbonic acid, a peroxycarboxylic acid, potassium persulfate, t-butyl peroxyisobutyrate, and 2,2'-azobisisobutyronitrile.

Examples of the photopolymerization initiator may include: acetophenone-based photopolymerization initiators such as 4-(2-hydroxyethoxy)phenyl (2-hydroxy-2-propyl) ketone (e.g., a product available under the trade name Darocur-2959 from Ciba Japan), $\alpha$-hydroxy-$\alpha,\alpha'$-dimethylacetophenone (e.g., a product available under the trade name Darocur-1173 from Ciba Japan), methoxyacetophenone, 2,2-dimethoxy-2-phenylacetophenone (e.g., a product available under the trade name Irgacure-651 from Ciba Japan), and 2-hydroxy-2-cyclohexylacetophenone (e.g., a product available under the trade name Irgacure-184 from Ciba Japan); ketal-based photopolymerization initiators such as benzyl dimethyl ketal; other halogenated ketones; and acylphosphine oxides (e.g., a product available under the trade name Irgacure-819 from Ciba Japan).

The polymerization initiators may be used alone or in combination.

The lower limit value of the content of the polymerization initiator is preferably 0.05 wt%, more preferably 0.1 wt%, and the upper limit value thereof is preferably 5.0 wt%, more preferably 1.0 wt%, with respect to the whole continuous oil phase component. When the content of the polymerization initiator is less than 0.05 wt% with respect to the whole continuous oil phase component, the amount of unreacted monomer components increases, with the result that the amount of monomers remaining in a porous material to be obtained may increase. When the content of the polymerization initiator is more than 5.0 wt% with respect to the whole continuous oil phase component, the mechanical physical properties of a porous material to be obtained may lower.

It should be noted that the amount of radicals generated by the photopolymerization initiator varies depending on, for example, the kind, intensity, and irradiation time of irradiation light and the amount of dissolved oxygen in a mixture of a monomer and a solvent as well. In addition, when the amount of dissolved oxygen is large, the amount of radicals generated by the photopolymerization initiator is suppressed, and thus polymerization does not sufficiently proceed, with the result that the amount of an unreacted product may increase. Accordingly, it is preferred to blow inert gas such as nitrogen into a reaction system to replace oxygen by the inert gas or to perform degassing by reduced pressure treatment in advance before photoirradiation.

<<D-1-2-4. Cross-linking agent>>

The continuous oil phase component includes a cross-linking agent.

The cross-linking agent is typically used for constructing amore three-dimensional molecular structure by linking polymer chains together. The selection of the kind and content of the cross-linking agent is influenced by structural characteristics, mechanical characteristics, and fluid treatment characteristics desired for a porous material to be obtained. The selection of the specific kind and content of the cross-linking agent is important for realizing a desired combination of the structural characteristics, mechanical characteristics, and fluid treatment characteristics of the porous material.

In the production method for the foam, it is preferred that at least two kinds of cross-linking agents having different weight average molecular weights be each used as the cross-linking agent.

In the production method for the foam, it is more preferred to use, as the cross-linking agent, "one or more kinds selected from a polyfunctional (meth)acrylate, a polyfunctional (meth)acrylamide, and a polymerization-reactive oligomer each having a weight average molecular weight of 800 or more" in combination with "one or more kinds selected from a polyfunctional (meth) acrylate and a polyfunctional (meth)acrylamide each having a weight average molecular weight of 500 or less." Herein, the polyfunctional (meth)acrylate specifically refers to a polyfunctional (meth) acrylate having at least two ethylenically unsaturated groups per molecule, and the polyfunctional (meth)acrylamide specifically refers to a polyfunctional (meth)acrylamide having at least two ethylenically unsaturated groups per molecule.

Examples of the polyfunctional (meth)acrylate include diacrylates, triacrylates, tetraacrylates, dimethacrylates, trimethacrylates, and tetramethacrylates.

Examples of the polyfunctional (meth)acrylamide include diacrylamides, triacrylamides, tetraacrylamides, dimethacrylamides, trimethacrylamides, and tetramethacrylamides.

The polyfunctional (meth) acrylate may be derived from, for example, a diol, a triol, a tetraol, or a bisphenol A derivative. Specifically, the polyfunctional (meth)acrylatemaybe derived from, for example, 1,10-decanediol, 1,8-octanediol, 1,6-hexanediol, 1,4-butanediol, 1,3-butanediol, 1,4-but-2-enediol, ethylene glycol, diethylene glycol, trimethylolpropane, pentaerythritol, hydroquinone, catechol, resorcinol, triethylene glycol, polyethylene glycol, sorbitol, polypropylene glycol, polytetramethylene glycol, or a propylene oxide-modified product of bisphenol A.

The polyfunctional (meth) acrylamide may be derived from, for example, its corresponding diamine, triamine, or tetraamine.

Examples of the polymerization-reactive oligomer include urethane (meth)acrylate, epoxy (meth)acrylate, copolyester (meth)acrylate, and oligomer di(meth)acrylate. Hydrophobic urethane (meth)acrylate is preferred.

The weight average molecular weight of the polymerization-reactive oligomer is preferably 1, 500 or more, more preferably 2,000 or more. The upper limit of the weight average molecular weight of the polymerization-reactive oligomer is not particularly limited, but is, for example, preferably 10,000 or less.

When the "one or more kinds selected from a polyfunctional (meth)acrylate, polyfunctional (meth)acrylamide, and a polymerization-reactive oligomer each having a weight average molecular weight of 800 or more" and the "one or more kinds selected from a polyfunctional (meth)acrylate and a polyfunctional (meth)acrylamide each having a weight average molecular weight of 500 or less" are used in combination as the cross-linking agent, the lower limit value of the usage of the "one or more kinds selected from a polyfunctional (meth)acrylate, a polyfunctional (meth)acrylamide, and a polymerization-reactive oligomer each having a weight average molecular weight of 800 or more" is preferably 30 wt%, and the upper limit value thereof is preferably 100 wt%, more preferably 80 wt%, with respect to the total amount of the hydrophilic polyurethane-based polymer and the ethylenically unsaturated monomer in the continuous oil phase component. When the usage of the "one or more kinds selected from a polyfunctional (meth)acrylate, a polyfunctional (meth)acrylamide, and a polymerization-reactive oligomer each having a weight average molecular weight of 800 or more" is less than 30 wt% with respect to the total amount of the hydrophilic polyurethane-based polymer and the ethylenically unsaturated monomer in the continuous oil phase component, the cohesive strength of a foam to be obtained may lower, and it may become difficult to achieve both of toughness and flexibility. When the usage of the "one or more kinds selected from a polyfunctional (meth)acrylate, a polyfunctional (meth)acrylamide, and a polymerization-reactive oligomer each having a weight average molecular weight of 800 or more" is more than 100 wt% with respect to the total amount of the hydrophilic polyurethane-based polymer and the ethylenically unsaturated monomer in the continuous oil phase component, the emulsification stability of the W/O emulsion lowers, with the result that a desired foam may not be obtained.

When the "one or more kinds selected from a polyfunctional (meth)acrylate, a polyfuncti onal (meth)acrylamide, and a polymerization-reactive oligomer each having a weight average molecular weight of 800 or more" and the "one or more kinds selected from a polyfunctional (meth)acrylate and a polyfunctional (meth)acrylamide each having a weight average molecular weight of 500 or less" are used in combination as the cross-linking agent, the lower limit value of the usage of the "one or more kinds selected from a polyfunctional (meth)acrylate and a polyfunctional (meth) acrylamide each having a weight average molecular weight of 500 or less" is preferably 1 wt%, more preferably 5 wt%, and the upper limit value thereof is preferably 30 wt%, more preferably 20 wt%, with respect to the total amount of the hydrophilic polyurethane-based polymer and the ethylenically unsaturated monomer in the continuous oil phase component. When the usage of the "one or more kinds selected from a polyfunctional (meth) acrylate and a polyfunctional (meth)acrylamide each having a weight average molecular weight of 500 or less" is less than 1 wt% with respect to the total amount of the hydrophilic polyurethane-based polymer and the ethylenically unsaturated monomer in the continuous oil phase component, heat resistance lowers, with the result that a cell structure may collapse owing to shrinkage in the step (IV) of dehydrating a water-containing polymer. When the usage of the "one or more kinds selected from a polyfunctional (meth)acrylate and a polyfunctional (meth)acrylamide each having a weight average molecular weight of 500 or less" is more than 30 wt% with respect to the total amount of the hydrophilic polyurethane-based polymer and the ethylenically unsaturated monomer in the continuous oil phase component, the toughness of a foam to be obtained lowers, with the result that the foam may exhibit brittleness.

The cross-linking agents may be used alone or in combination.

<<D-1-2-5. Other components in continuous oil phase component»

The continuous oil phase component may include any appropriate other component in such a range that the effects of the present invention are not impaired. Typical preferred examples of such other component include a catalyst, an antioxidant, a light stabilizer, and an organic solvent. Such other components may be used alone or in combination.

An example of the catalyst is a urethane reaction catalyst. Any appropriate catalyst may be adopted as the urethane reaction catalyst. A specific example thereof is dibutyltin dilaurate.

Any appropriate content may be adopted as the content of the catalyst depending on a catalytic reaction of interest.

The catalysts may be used alone or in combination.

Examples of the antioxidant include a phenol-based antioxidant, a thioether-based antioxidant, and a phosphorus-based antioxidant.

Any appropriate content may be adopted as the content of the antioxidant in such a range that the effects of the present invention are not impaired.

The antioxidants may be used alone or in combination.

Any appropriate organic solvent may be adopted as the organic solvent in such a range that the effects of the present invention are not impaired.

Any appropriate content may be adopted as the content of the organic solvent in such a range that the effects of the present invention are not impaired.

The organic solvents may be used alone or in combination.

Examples of the light stabilizer include benzotriazole-based, benzophenone-based, salicylate-based, cyanoacrylate-based, nickel-based, and triazine-based UV absorbers and hindered amine-based light stabilizers. Of those light stabilizers, a benzotriazole-based UV absorber and a hindered amine-based light stabilizer are preferred. Specific examples of such benzotriazole-based UV absorber and hindered amine-based light stabilizer include "TINUVIN" series manufactured by BASF.

Any appropriate content may be adopted as the content of the light stabilizer in such a range that the effects of the present invention are not impaired. For example, the content of the light stabilizer with respect to the entirety of the continuous oil phase component is preferably 0.01 wt% to 10 wt%, more preferably 0.1 wt% to 5 wt%.

The light stabilizers may be used alone or in combination.

<<D-2. Step (II) of forming W/O emulsion into shape>>

In the step (II), any **appropriate** shape formation method may be adopted as the method of forming the W/O emulsion into a shape. For example, there is given a method involving continuously supplying the W/O emulsion on a moving belt and forming the emulsion into a flat sheet shape on the belt. Further, there is given a method involving applying the W/O emulsion onto one surface of a thermoplastic resin film to form the emulsion into a shape.

In the step (II), when the method involving applying the W/O emulsion onto one surface of a thermoplastic resin film to form the emulsion into a shape is adopted as the method of forming the W/O emulsion into a shape, the application method is, for example, a method using a roll coater, a die coater, or a knife coater.

<<D-3. Step (III) of polymerizing W/O emulsion formed into shape>>

In the step (III), any appropriate polymerization method may be adopted as the method of polymerizing the W/O emulsion formed into a shape. For example, there are given: a method involving continuously supplying the W/O emulsion onto a moving belt having a structure in which a belt surface of a belt conveyor is warmed with a heating apparatus and polymerizing the emulsion by heating while forming the emulsion into a flat sheet shape on the belt; and a method involving continuously supplying the W/O emulsion onto a moving belt having a structure in which a belt surface of a belt conveyor is warmed by irradiation with active energy rays and polymerizing the emulsion by irradiation with active energy rays while forming the emulsion into a flat sheet shape on the belt.

When the polymerization is performed by heating, the lower limit value of a polymerization temperature (heating temperature) is preferably 23°C, more preferably 50°C, still more preferably 70 °C, particularly preferably 80°C, most preferably 90 °C, and the upper limit value thereof is preferably 150 °C, more preferably 130°C, still more preferably 110°C. When the polymerization temperature is less than 23°C, it takes a long time to perform the polymerization, with the result that industrial productivity may lower. When the polymerization temperature is more than 150 °C, the pore diameters of a foam to be obtained may become non-uniform, and the strength of the foam may lower. It should be noted that the polymerization temperature does not need to be kept constant, and for example, may be changed in two stages or a plurality of stages during the polymerization.

When the polymerization is per formed by irradiation with active energy rays, examples of the active energy rays include UV light, visible light, and electron beams. The active energy rays are preferably UV light and visible light, more preferably visible to UV light having a wavelength of 200 nm to 800 nm. The W/O emulsion has a strong tendency to scatter light. Accordingly, when the visible to UV light having a wavelength of 200 nm, to 800 nm is used, the light can pass through the W/O emulsion. Further, a photopolymerization initiator which can be activated by the light having a wavelength of 200 nm to 800 nm is easily available, and a source for the light is also easily available.

The lower limit value of the wavelength of the active energy rays is preferably 200 nm, more preferably 300 nm, and the upper limit value thereof is preferably 800 nm, more preferably 450 nm.

As a typical apparatus to be used in the irradiation with active energy rays, for example, there is given an apparatus having a spectrum distribution in a wavelength region of 300 to 400 nm as a UV lamp which can perform irradiation with UV light. Examples thereof include a chemical lamp, a Black Light lamp (manufactured by TOSHIBA LIGHTING & TECHNOLOGY CORPORATION, trade name), and a metal halide lamp.

An illuminance upon the irradiation with active energy rays maybe set to any appropriate illuminance by regulating a distance from an irradiation apparatus to an object to be irradiated and a voltage. For example, according to the method disclosed in JP 2003-13015 A, irradiation with UV light in each step can be performed in a plurality of divided stages, thereby precisely regulating the efficiency of a polymerization reaction.

In order to prevent oxygen having a polymerization-inhibiting action from causing an adverse influence, for example, the irradiation with UV light is preferably performed under an inert gas atmosphere after a W/O emulsion has been applied onto one surface of a base material such as a thermoplastic resin film and formed into a shape, or by covering with a film which transmits UV light but blocks oxygen, e.g., polyethylene terephthalate coated with a peeling agent such as silicone, after a W/O emulsion has been applied onto one surface of a base material such as a thermoplastic resin film and formed into a shape.

Any appropriate thermoplastic resin film may be adopted as the thermoplastic resin film as long as the W/O emulsion can be applied onto one surface of the film and formed into a shape. Examples of the thermoplastic resin film include plastic films and sheets made of polyester, an olefin-based resin, and polyvinyl chloride. One or both surfaces of the film may be subjected to peel treatment. In addition, printing may be applied to one or both surfaces of the film.

The inert gas atmosphere refers to an atmosphere in which oxygen in a photoirradiation zone has been replaced by inert gas. Accordingly, the amount of oxygen present in the inert gas atmosphere needs to be as small as possible, and is preferably 5,000 ppm or less in terms of oxygen concentration.

<<D-4. Step (IV) of dehydrating resultant water-containing polymer>>

In the step (IV), the resultant water-containing polymer is dehydrated. An aqueous phase component is present in a dispersed state in the water-containing polymer obtained in the step (III). The foam is obtained by removing the aqueous phase component through dehydration to dry the polymer.

Any appropriate drying method may be adopted as the dehydration method in the step (IV). Examples of such drying method include vacuum drying, freeze drying, press drying, drying in a microwave oven, drying in a heat oven, drying with infrared rays, and combinations of these technologies.

<<E. Base material layer>>

The base material layer in the foam layer may be formed of any appropriate base material in such a range that the effects of the present invention are not impaired. Specific examples of the base material include a fiber woven fabric, a fiber nonwoven fabric, a fiber laminated fabric, a fiber knitted fabric, a resin sheet, ametalfoil sheet, and an inorganic fiber. Any appropriate thickness may be adopted as the thickness of the base material layer depending on materials and purposes.

A woven fabric formed of any appropriate fiber may be adopted as the fiber woven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber woven fabric may be subjected to metallic processing through plating, sputtering, or the like.

A nonwoven fabric formed of any appropriate fiber may be adopted as the fiber nonwoven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber nonwoven fabric may be subjected to metallic processing through plating, sputtering, or the like. A more specific example of the fiber nonwoven fabric is a spunbond nonwoven fabric.

A laminated fabric formed of any appropriate fiber may be adopted as the fiber laminated fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber laminated fabric may be subjected to metallic processing through plating, sputtering, or the like. A more specific example of the fiber laminated fabric is a polyester fiber laminated fabric.

A knitted fabric formed of, for example, and appropriate fiber may be adopted as the fiber knitted fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber knitted fabric may be subjected to metallic processing through plating, sputtering, or the like.

A sheet formed of any appropriate resin may be adopted as the resin sheet. An example of such resin is a thermoplastic resin. The resin sheet may be subjected to metallic processing through plating, sputtering, or the like.

A sheet formed of any appropriate metal foil may be adopted as the metal foil sheet.

Any appropriate inorganic fiber may be adopted as the inorganic fiber, Specific examples of such inorganic fiber include a glass fiber, a metal fiber, and a carbon fiber.

In the present invention, when voids are present in the base material layer, the same material as that for the foam may be present in part or all of the voids.

The base materials may be used alone or in combination.

<<F. Other layer>>

A layer having any appropriate function may be adopted as the other layer. Examples of such layer include an adhesion layer, an easy-adhesion layer, a base material layer, a reinforcing layer, an easy-writing layer, an antifouling layer, a hard coat layer, and a laminate thereof. The other layer may have a single layer form or may have a laminate form.

Examples of the adhesion layer include an adhesive layer and a pressure-sensitive adhesive layer. The adhesion layer is formed from any appropriate material. Such material may be appropriately selected depending on, for example, the material for forming the display base material.

A layer formed from any appropriate material may be adopted as the easy-adhesion layer. Such material may be appropriately selected depending on, for example, the material for forming the display base material.

The same base material layer as that in the foam layer may be adopted as the base material layer.

Any appropriate reinforcing material may be adopted as the reinforcing layer. Examples of such reinforcing material include a metal material, a heat-resistant plastic material, a paper material, a cloth material, a fiber material, and a wire material.

A layer formed from any appropriate material may be adopted as the easy-writing layer. The layer is, for example, an easy-adhesion layer constituted of a porous substance and a binder resin. As the porous substance, there may be used, for example, silica (precipitated or gel-type silica), talc, kaolin, clay, alumina white, diatomaceous earth, titaniumoxide, calcium carbonate, and barium sulfate. It should be noted that such porous substances may be used alone or in combination. As the binder resin, there may be suitably used, for example, a polyester resin, a polyacrylate resin, a polyvinyl chloride resin, a polyvinyl acetate resin, a polyamide resin, and a polystyrene resin. It should be noted that such binder resins may be used alone or in combination.

A layer formed from any appropriate material may be adopted as the antifouling layer. Examples thereof include: a layer which is formed of polysiloxane or a fluorine resin and has a low surface free energy, and to which dirt hardly adheres; such a layer that a hydrophilic functional group such as an amide group is aligned to its surface and hence dirt is easily removed from the surface with water; a layer provided with a self-cleaning effect by incorporating a photocatalyst such as titanium oxide; and a hard coat material made of a photocurable urethane acrylate.

A typical example of the hard coat layer is a hard and transparent crosslink-cured resin layer. As a resin for forming such hard coat layer, there are given, for example, an acrylic resin, a silicone-based resin, a polyester-based resin, a urethane-based resin, an amide-based resin, and an epoxy-based resin.

The thickness of the other layer may be appropriately set depending on, for example, its function, applications, and construction.

<<G. Method of producing attached material for display>>

Any appropriate production method may be adopted as a method of producing the attached material for display of the present invention. A preferred method of producing the attached material for display of the present invention is, for example, a method involving: applying the W/O emulsion to one surface of a base material (such as the display base material or the other layer); performing heating or irradiation with an active energy ray under an inert gas atmosphere or in a state where the resultant is covered with a UV-permeable film coated with a peeling agent such as silicone so that oxygen may be blocked to polymerize the W/O emulsion to provide a water-containing polymer; and dehydrating the resultant water-containing polymer.

When the foam layer includes the base material layer, the foam layer is preferably produced as described below. Two sheets each obtained by applying the W/O emulsion to one surface of a UV-permeable film coated with a peeling agent such as silicone are prepared. The base material layer is laminated on the applied surface of one of the two W/O emulsion-applied sheets, and the other W/O emulsion-applied sheet is laminated so that its applied surface may be in contact with the other surface of the laminated base material layer. In this state, the W/O emulsion is polymerized by performing heating or irradiation with an active energy ray to provide a water-containing polymer, and the resultant water-containing polymer is dehydrated.

As a method of applying the W/O emulsion, for example, there are given a roll coater, a die coater, and a knife coater.

It should be appreciated that, the attached material for display of the present invention can be produced by laminating the respective layers prepared in advance according to any appropriate method.

Examples

Hereinafter, the present invention is described by way of Examples. However, the present invention is not limited thereto. It should be noted that normal temperature means 23°C.

(Measurement of molecular weight)

A weight average molecular weight was determined by gel permeation chromatography (GPC).

Apparatus: "HLC-8020" manufactured by Tosoh Corporation
Column: "TSKgel GMH$_{HR}$-H (20) " manufactured by Tosoh Corporation
Solvent: Tetrahydrofuran
Standard substance: Polystyrene

(Measurement of average pore diameter)

A produced foam sheet was cut in its thickness direction with a microtome cutter to prepare a sample for measurement. Images of the cut surface of the sample for measurement were taken at magnifications of 800 to 5,000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter.

(180° Bending test)

A produced foam was cut in its machine direction (MD) or transverse direction (TD) to prepare samples for measurement each having a size of 100 mm by 100 mm. Each of the samples for measurement was bent by 180° in its longitudinal direction at a bending position about 50 mm away from each of its end portions so that the end portions overlapped each other. After that, one reciprocation of a 1-kg roller was performed from the overlapped end portion side toward the bending position side, and then the generation status of a crack at the bending position was visually observed. The number of the samples measured was n=3.

(Measurement of density of foam)

The resultant foam was cut into five test pieces each having a size of 100 mm by 100 mm. The weights were divided by the volumes to determine bulk densities. An average value of the resultant bulk densities was defined as a density of the foam.

(Measurement of cell content)

Only an oil phase component in the production of an emulsion was polymerized, and the resultant polymer sheet was cut into five test pieces each having a size of 100 mm by 100 mm. The weights were divided by the volumes to determine bulk densities. An average value of the resultant bulk densities was defined as a density of a resin component constituting the foam (or foam portion). The cell content of the foam (or foam portion) was calculated according to the following equation through use of a relative density obtained by dividing the density of the foam (or foam portion) by the density of the resin component.

$$\text{Cell content} = (1 - \text{Relative density}) \times 100$$

(Measurement of normal shear adhesive strength)

The resultant foam with a display base material was defined as a test piece and cut into pieces each having a size of 25 mm by 100 mm. The surface of the foam having an area of 25 mm by 25 mm was attached to a BA plate (SUS304), and crimping was performed by one reciprocation of a 2-kg roller on a horizontally placed sample. After the crimping, each of the samples was left to stand at normal temperature overnight, fixed to a Tensilon universal tester at normal temperature so as to be perpendicular, pulled at a tension speed of 50 mm/min, and measured for its shearing adhesive strength in the middle of the pulling. The number of the samples measured was n=2, and an average of the measured values was defined as a normal shear adhesive strength.

(Measurement of 180° peel test strength)

The resultant foam with a display base material was defined as a test piece and cut into pieces each having a size of 20 mm by 100 mm. The surface of the foam was attached to a BA plate (SUS304), and crimping was performed by one reciprocation of a 2-kg roller on a horizontally placed sample. After the crimping, each of the samples was left to stand at normal temperature for 30 minutes, subjected to peeling in a 180-degree direction at a tension speed of 50 mm/min through use of a Tensilon universal tester, and measured for its peel adhesive strength in the middle of the peeling. The number of the samples measured was n=2, and an average of the measured values was defined as a 180° peel test strength.

(Measurement of 60°C holding strength)

The resultant foam with a display base material was defined as a test piece and cut into a piece having a size of 10 mm by 100 mm. The surface of the foam was attached to a bakelite plate so as to achieve an attachment area of 10 mm by 20 mm, and crimping was performed by one reciprocation of a 2-kg roller. After the crimping, under a 60°C atmosphere, the bakelite plate was fixed so that the sample was perpendicular, a load of 500 g was applied to the end portion of the foam, and the sample was left to stand for 2 hours. The sample after left to stand for 2 hours was measured for its amount of deviation in attachment position.

(Rate of dimensional change after storage at 125°C for 22 hours)

The resultant foam was measured for its dimensional change by heating in conformity with the dimensional stability evaluation at high temperature of JIS-K-6767. That is, the resultant foam was cut into a test piece having a size of 100 mm by 100 mm, stored in an oven at 125°C for 22 hours, and then determined for its rate of dimensional change before and after the heating storage treatment in conformity with the dimensional stability evaluation at high temperature of JIS-K-6767.

[Production Example 1]: Preparation of mixed syrup 1

A reactor equipped with a cooling tube, a temperature gauge, and a stirrer was fed with 173.2 parts by weight of a monomer solution formed of 2-ethylhexyl acrylate (manufactured by TOAGOSEI CO., LTD., hereinafter abbreviated as "2EHA") as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of dibutyltin dilaurate (manufactured by KISHIDA CHEMICAL Co. , Ltd., hereinafter abbreviated as "DBTL") as a urethane reaction catalyst. To the stirred mixture were added dropwise 12.4 parts by weight of hydrogenated xylylene diisocyanate (manufactured by Takeda Pharmaceutical Co., Ltd., TAKENATE 600, hereinafter abbreviated as "HXDI"), and the resultant mixture was subjected to a reaction at 65°C for 4 hours. It should be noted that the usage of a polyisocyanate component and a polyol component in terms of NCO/OH (equivalent ratio) was 1.6. After that, 5.6 parts by weight of 2-hydroxyethyl acrylate (manufactured by KISHIDA CHEMICAL Co. , Ltd., hereinafter abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer having an acryloyl group at each of both terminals/ethylenically unsaturated monomer mixed syrup were added 27.3 parts by weight of 2EHA, 51.8 parts by weight of n-butyl acrylate (manufactured by TOAGOSEI CO., LTD. , hereinafter abbreviated as "BA"), 17.6 parts by weight of isobornyl acrylate (manufactured by OSAKA ORGANIC CHEMICAL INDUSTRY. , hereinafter abbreviated as "IBXA"), and 10.5 parts by weight of acrylic acid (manufactured by TOAGOSEI CO., LTD., hereinafter abbreviated as "AA") as a polar monomer. Thus, a hydrophilic polyurethane-based polymer/ethylenically unsaturated monomer mixed syrup 1 was obtained.

[Production Example 2]: Preparation of mixed syrup 2

A reactor equipped with a cooling tube, a temperature gauge, and a stirrer was fed with 173.2 parts by weight of a monomer solution formed of 2EHA as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of DBTL as a urethane reaction catalyst. To the stirred mixture were added dropwise 12.4 parts by weight of HXDI, and the resultant mixture was subjected to a reaction at 65°C for 4 hours. It should be noted that the usage of a polyisocyanate component and a polyol component in terms of NCO/OH (equivalent ratio) was 1.6. After that, 5.6 parts by weight of HEA were added dropwise, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer/ethylenically unsaturated monomer mixed syrup were added 95.8 parts by weight of 2EHA, 92.5 parts by weight of BA, 31.3 parts by weight of IBXA, and 18.8 parts by weight of AA as a polar monomer. Thus, a hydrophilic polyurethane-based polymer/ethylenically unsaturated monomer mixed syrup 2 was obtained.

[Production Example 3]: Preparation of mixed syrup 3

A reactor equipped with a cooling tube, a temperature gauge, and a stirrer was fed with 173.2 parts by weight of a monomer solution formed of 2EHA as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of DBTL as a urethane reaction catalyst. To the stirred mixture were added dropwise 12.4 parts by weight of HXDI, and the resultant mixture was subjected to a reaction at 65 °C for 4 hours. It should be noted that the usage of a polyisocyanate component and a polyol component in terms of NCO/OH (equivalent ratio) was 1.6. After that, 5.6 parts by weight of HEA were added dropwise, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer/ethylenically unsaturated monomer mixed syrup were added 24.7 parts by weight of 2EHA, 41.9 parts by weight of BA, and 8.5 parts by weight of 4-hydroxybutyl acrylate (manufactured by TOAGOSEI CO., LTD., hereinafter abbreviated as "4HBA") as a polar monomer. Thus, a hydrophilic polyurethane-based polymer/ethylenically unsaturated monomer mixed syrup 3 was obtained.

[Example 1]

100 Parts by weight of the hydrophilic polyurethane-based polymer/ethylenically unsaturated monomer mixed syrup 1 obtained in Production Example 1 were homogeneously mixed with 11.9 parts by weight of 1, 6-hexanediol diacrylate (available under the trade name "NK Ester A-HD-N" from Shin Nakamura Chemical Co., Ltd.) (molecular weight: 226), 47.7 parts by weight of a urethane acrylate (hereinafter abbreviated as "UA") (molecular weight: 3,720) having an ethylenically unsaturated group at each of both terminals, which is obtained by treating both terminals of polyurethane synthesized from polytetramethylene glycol (hereinafter abbreviated as "PTMG") and isophorone diisocyanate (hereinafter abbreviated as "IPDI") with HEA, as a reactive oligomer, 0.48 part by weight of diphenyl(2,4,6-trimethylbenzoyl)phosphine oxide (available under the trade name "Lucirin TPO" from BASF) as a photoinitiator, 0.95 part by weight of a hindered phenol-based antioxidant (available under the trade name "IRGANOX 1010" from by Ciba Japan), and 2.0 parts by weight of a light stabilizer (e.g., available under the trade name "TINUVIN 123" from BASF). Thus, a continuous oil phase component (hereinafter referred to as "oil phase") was obtained. Meanwhile, 300 parts by weight of ion-exchanged water as an aqueous phase component (hereinafter referred to as "aqueous phase") with respect to 100 parts by weight of the oil phase were continuously supplied dropwise at normal temperature into a stirring/mixing machine as an emulsifying machine fed with the oil phase. Thus, a stable W/O emulsion (1) was prepared. It should be noted that a weight ratio between the aqueous phase and the oil phase was 75/25.

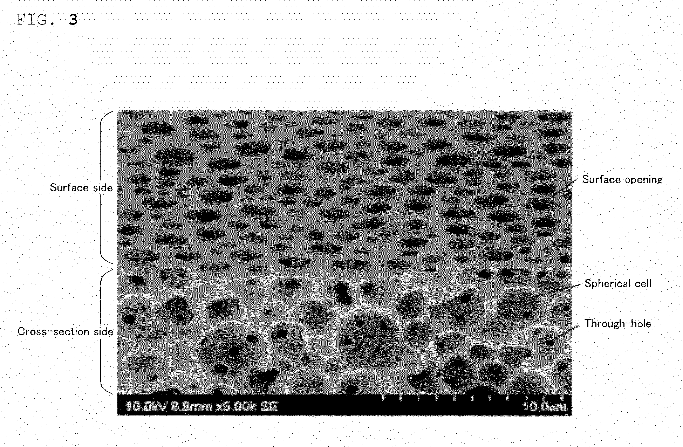

The W/O emulsion (1) that had been left at rest and stored under normal temperature for 30 minutes after its preparation was applied onto a release-treated polyethylene terephthalate film (hereinafter referred to as "PET film") having a thickness of 38 μm so that the thickness of a foam layer after photoirradiation became 150 μm, and the resultant was continuously formed into a sheet shape. Further, a polyester fiber laminated fabric having a thickness of 50 μm (available under the trade name "MILIFE (trademark) TY0503FE" from JX Nippon ANCI Corporation) obtained by laminating stretched polyester continuous fibers while aligning the fibers in longitudinal and lateral directions was laminated on the sheet. Further, a product obtained by applying the W/O emulsion (1) that had been left at rest and stored under room temperature for 30 minutes after its preparation onto a release-treated PET film having a thickness of 38 μm so that the thickness of a foam layer after photoirradiation became 150 μm was separately prepared, and the applied surface was covered with the polyester fiber laminated fabric. The sheet was irradiated with UV light having a light illuminance of 5 mW/cm$^2$ (measured with TOPCON UVR-T1 having a peak sensitivity maximum wavelength of 350 nm) by using a black light (15 W/cm) to provide a high-water content cross-linked polymer having a thickness of 310 μm. Next, the upper surface film was peeled and the high-water content cross-linked polymer was heated at 130°C over 10 minutes to provide a foam (1) having a thickness of about 0.3 mm.
It should be noted that no crack occurred in the foam (1) in the 180° bending test.
In addiction, FIG. **3** shows a photographic view of a surface/cross-sectional SEM photograph obtained by photographing the produced foam from an oblique direction.
An attached piece (1) for display was obtained by laminating, on a piece of paper having a thickness of 70 μm, the foam (1) cut into the dimensions of the piece of paper through an adhesive. Table 1 shows the results of the respective evaluations of the resultant attached piece (1) for display.
When the foam layer of the resultant attached piece (1) for display was pressed against a metal plate, the attached piece (1) for display was able to be attached and easily peeled. In addition, when the piece was repeatedly attached and peeled, no significant reduction of its adhesion was observed.

[Example 2]

100 Parts by weight of the hydrophilic polyurethane-based polymer/ethylenically unsaturated monomer mixed syrup 2 obtained in Production Example 2 were homogeneously mixed with 10.0 parts by weight of 1,6-hexanediol diacrylate, 47.7 parts by weight of UA (having a molecular weight of 3,720) having an ethylenically unsaturated group at each of both terminals, which is obtained by treating both terminals of polyurethane synthesized from PTMG and IPDI with HEA, as a reactive oligomer, 0.49 part by weight of diphenyl (2,4,6-trimethylbenzoyl)phosphine oxide (available under the trade name "Lucirin TPO" from BASF), 0.99 part by weight of a hindered phenol-based antioxidant (available under the trade name "IRGANOX 1010" from Ciba Japan), and 2.05 parts by weight of a light stabilizer (available under the trade name "TINUVIN 123" from BASF). Thus, a continuous oil phase component (hereinafter referred to as "oil phase") was obtained. Meanwhile, 186 parts by weight of ion-exchanged water as an aqueous phase component (hereinafter referred to as "aqueous phase") with respect to 100 parts by weight of the oil phase were continuously supplied dropwise under normal temperature into a stirring/mixingmachine as an emulsifying machine fed with the oil phase. Thus, a stable W/O emulsion (2) was prepared. It should be noted that a weight ratio between the aqueous phase and the oil phase was 65/35.

The resultant W/O emulsion (2) was left at rest and stored under normal temperature for 30 minutes, and was then applied onto a release-treated PET film having a thickness of 38 $\mu$m so that a thickness after photoirradiation became 0.30 mm, followed by continuous forming into a sheet shape. Further, the applied surface was covered with the release-treated PET film having a thickness of 38 $\mu$m. The sheet was irradiated with UV light having a light illuminance of 5 mW/cm$^2$ (measured with TOPCON UVR-T1 having a peak sensitivity maximum wavelength of 350 nm) by using a black light (15 W/cm) to provide a high-water content cross-linked polymer having a thickness of 300 $\mu$m. Next, the upper surface film was peeled and the high-water content cross-linked polymer was heated at 130°C over 10 minutes to provide a foam (2) having a thickness of about 0.3 mm.

It should be noted that no crack occurred in the foam (2) in the 180° bending test.

An attached piece (2) for display was obtained by laminating, on one end portion of a piece of paper having a thickness of 70 $\mu$m, the foam (2) cut into dimensions smaller than those of the piece of paper through a pressure-sensitive adhesive. Table 1 shows the results of the respective evaluations of the resultant attached piece (2) for display.

When the foam layer of the resultant attached piece (2) for display was pressed against a glass plate, the attached piece (2) for display was able to be attached and easily peeled. In addition, when the piece was repeatedly attached and peeled, no significant reduction of its adhesion was observed.

[Example 3]

A foam (3) having a thickness of about 0.3 mm was obtained by performing the same operations except that the W/O emulsion (1) was used in Example 2.

It should be noted that no crack occurred in the foam (3) in the 180° bending test.

An attached piece (3) for display was obtained by laminating, on one surface of a PET film piece having a thickness of 100 $\mu$m as a display base material, the foam (3) cut into the dimensions of the film piece through an adhesive. Table 1 shows the results of the respective evaluations of the resultant attached piece (3) for display.

When the foam layer of the resultant attached piece (3) for display was pressed against a plastic plate, the attached piece (3) for display was able to be attached and easily peeled. In addition, when the piece was repeatedly attached and peeled, no significant reduction of its adhesion was observed.

[Example 4]

100 Parts by weight of the hydrophilic polyurethane-based polymer/ethylenically unsaturated monomer mixed syrup 3 obtained in Production Example 3 were homogeneously mixed with 20.0 parts by weight of 1,6-hexanediol diacrylate, 47.7 parts by weight of UA (having a molecular weight of 3,720) having an ethylenically unsaturated group at each of both terminals, which is obtained by treating both terminals of polyurethane synthesized from PTMG and IPDI with HEA, as a reactive oligomer, 0.49 part by weight of diphenyl(2,4,6-trimethylbenzoyl)phosphine oxide (available under the trade name "Lucirin TPO" from BASF), 0.99 part by weight of a hindered phenol-based antioxidant (available under the trade name "IRGANOX 1010" from Ciba Japan), and 2 . 05 parts by weight of a light stabilizer (available under the trade name "TINUVIN 123" from BASF) . Thus, a continuous oil phase component (hereinafter referred to as "oil phase") was obtained. Meanwhile, 567 parts by weight of ion-exchanged water as an aqueous phase component (hereinafter referred to as "aqueous phase") with respect to 100 parts by weight of the oil phase were continuously supplied dropwise under normal temperature into a stirring/mixing machine as an emulsifying machine fed with the oil phase. Thus, a stable W/O emulsion (3) was prepared. It should be noted that a weight ratio between the aqueous phase and the oil phase was 85/15.

The W/O emulsion (3) that had been left at rest and stored under normal temperature for 30 minutes after its preparation was applied onto a PET film having a thickness of 50 $\mu$m as a display base material so that the thickness of a foam layer after photoirradiation became 300 $\mu$m, and the resultant was continuously formed into a sheet shape. Further, the applied surface was covered with a release-treated PET film having a thickness of 38 $\mu$m. The sheet was irradiated with UV light having a light illuminance of 5 mW/cm$^2$ (measured with TOPCON UVR-T1 having a peak sensitivity maximum wavelength of 350 nm) by using a black light (15 W/cm) to provide a high-water content cross-linked polymer having a thickness of 300 $\mu$m. Next, the upper surface film was peeled and the high-water content cross-linked polymer was heated at 130°C over 10 minutes to provide an attached piece (4) for display having a thickness of about 0.3 mm. In addition, a foam (4) was separately obtained by the same operations as those of Example 2.

It should be noted that no crack occurred in the foam (4) in the 180° bending test.

Table 1 shows the results of the respective evaluations of the resultant attached piece (4) for display.

When the foam layer of the resultant attached piece (4) for display was pressed against a plastic plate, the attached piece (4) for display was able to be attached and easily peeled. Inaddition, when the piece was repeatedly attached and peeled, no significant reduction of its adhesion was observed.

[Table 1]

| | | | Example 1 | Example 2 | Example 3 | Example 4 |
|---|---|---|---|---|---|---|
| Polymerizable syrup No. | | | 1 | 2 | 1 | 3 |
| Aqueous phase/oil phase weight ratio | | | 75/25 | 65/35 | 75/25 | 85/15 |
| Display base material | | | Piece of paper | Piece of paper | PET | PET |
| Foam | Average cell diameter | Spherical cell | $[\mu m]$ | 3.4 | 2.8 | 3.4 | 2.6 |
| | | Through-hole | $[\mu m]$ | 1.2 | 0.6 | 1.2 | 0.9 |
| | Volume density | | $[g/cm^3]$ | 0.273 | 0.336 | 0.273 | 0.158 |
| Heat resistance | Rate of dimensional change after storage at 125°C | | [%] | -0.4 | -0.6 | -0.4 | -0.3 |
| Pressure-sensitive adhesive characteristics | Normal shear adhesive strength | | $[N/cm^3]$ | 10.8 | 10.1 | 10.9 | 10.4 |
| | 180° peel adhesive strength | | [N/20mm] | 0.1 | 0.1 | 0.1 | 0.1 |
| | 60°C holding strength | | [mm] | 0.1 | 0.1 | 0.1 | 0.1 |

Industrial Applicability

The attached material for display of the present invention is suitably applicable to, for example, a tag, a seal, a label, a whiteboard sheet, a calendar, a poster (such as a campaign poster), a dress-up wallpaper, or an advertisement poster or advertisement sticker that can be attached to any appropriate place.

Reference Signs List

100a    attached material for display
100b    attached material for display
100c    attached material for display
10      display base material
20      foam layer

**Claims**

1.  An attached material for display, comprising:

    a display base material; and
    a foam layer formed on one side of the display base material and having an open-cell structure having through-holes between adjacent spherical cells,
    wherein:

    the spherical cells have an average pore diameter of less than 20 $\mu$m;

the through-holes have an average pore diameter of 5 $\mu$m or less; and

the foam layer has, on a surface thereof, surface openings having an average pore diameter of 20 $\mu$m or less.

2. An attached material for display according to claim 1, wherein the foam layer is formed on one end portion of the display base material.

3. An attached material for display according to claim 1 or 2, wherein the foam layer includes a base material layer.

4. An attached material for display according to any one of claims 1 to 3, further comprising another layer.

5. An attached material for display according to any one of claims 1 to 4, wherein the foam has a normal shear adhesive strength of 1 N/cm$^2$ or more.

6. An attached material for display according to any one of claims 1 to 5, wherein the foam has a normal shear adhesive strength of 5 N/cm$^2$ or more.

FIG. 1

(a)

100a

10
20

(b)

100b

10
20

(c)

100c

10
21
23
22
20

FIG. 2

10.0kV 10.1mm x5.00k SE    10um    10.0um

FIG. 3

Surface side

Cross-section side

Surface opening

Spherical cell

Through-hole

10.0kV 8.8mm x5.00k SE    10.0um

## INTERNATIONAL SEARCH REPORT

| International application No. |
| --- |
| PCT/JP2012/082031 |

A. CLASSIFICATION OF SUBJECT MATTER
*G09F15/02*(2006.01)i, *B32B5/18*(2006.01)i, *G09F3/08*(2006.01)i, *G09F7/18*
(2006.01)i

According to International Patent Classification (IPC) or to both national classification and IPC

B. FIELDS SEARCHED

Minimum documentation searched (classification system followed by classification symbols)
G09F15/02, B32B5/18, G09F3/00-3/20, G09F7/18, C08J9/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2005-55845 A  (Katsuhiko KUWAHATA), 03 March 2005 (03.03.2005), entire text; all drawings (Family: none) | 1-6 |
| Y | JP 7-332587 A  (Asahi Kasei Corp.), 22 December 1995 (22.12.1995), entire text; all drawings (Family: none) | 1-6 |
| Y | JP 2006-22189 A  (Nitto Denko Corp.), 26 January 2006 (26.01.2006), paragraph [0062]; fig. 1(a) (Family: none) | 3-6 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 March, 2013 (08.03.13) | 19 March, 2013 (19.03.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2012/082031

C (Continuation).  DOCUMENTS CONSIDERED TO BE RELEVANT

| Category* | Citation of document, with indication, where appropriate, of the relevant passages | Relevant to claim No. |
|---|---|---|
| P,A | WO 2012/026368 A1  (Nitto Denko Corp.),<br>01 March 2012 (01.03.2012),<br>claims 9, 12, 13; paragraphs [0135] to [0137],<br>[0143]<br>& JP 2012-56985 A          & JP 2012-58318 A<br>& JP 2012-56986 A          & JP 2012-82256 A<br>& JP 2012-82257 A          & JP 2012-82258 A<br>& JP 2012-82259 A          & JP 2012-188610 A<br>& JP 2012-97250 A          & JP 2012-66569 A<br>& JP 2012-66570 A          & WO 2012/026361 A<br>& WO 2012/029537 A | 1-6 |

Form PCT/ISA/210 (continuation of second sheet) (July 2009)

**EP 2 793 212 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11342690 A
- JP 2001356724 A
- JP 9024573 A
- JP 2003013015 A